# EUROPÄISCHE PATENTANMELDUNG

(11) **EP 2 198 696 A1**
(43) Veröffentlichungstag der Anmeldung: **23.06.2010**
(21) Anmeldenummer: 08021895.1
(22) Anmeldetag: 17.12.2008
(51) Int. Cl.: A01G 23/00, B21F 11/00, B23D 23/00, B23D 29/00, F16G 11/00

(54) **Zugsystem**

(71) Anmelder: Eder, Wolfgang, 38302 Wolfenbüttel (DE)
(72) Erfinder: Eder, Wolfgang, 38302 Wolfenbüttel (DE)
(74) Vertreter: Rehmann, Thorsten

(57) **Zusammenfassung**

Die Erfindung betrifft eine Einrichtung zum Unterbrechen einer Zugkraft in einem eine Zugeinrichtung und ein Zugseil aufweisenden Zugsystem mit einem Schneidelement (28) und einem Seilführungselement (2), das bei Überschreiten einer definierten auf das Seilführungselement (2) wirkenden Maximalzugkraft selbsttätig aus einer Zugposition in eine Schneidposition bewegbar ist.

## Beschreibung

Die Erfindung betrifft eine Einrichtung zum Unterbrechen einer Zugkraft in einem eine Zugeinrichtung und ein Zugseil aufweisenden Zugsystem.

Derartige Zugsysteme werden in vielen verschiedenen Anwendungen verwendet. Ein Anwendungsbeispiel ist das Rücken von gefällten Baumstämmen aus dem Wald heraus in der Forstwirtschaft. Dabei wird an eine Zugeinrichtung, beispielsweise eine Seilwinde oder eine Schlepper, ein Zugseil angehängt, das herkömmlicherweise als ein Stahl- oder Drahtseil ausgebildet ist. Am anderen Ende des Zugseiles ist eine Vorrichtung angeordnet, die am zu ziehenden Baumstamm befestigt wird. Diese Vorrichtung kann beispielsweise in Form einer Kette oder eines weiteren Stahl- oder Drahtseiles ausgebildet sein, das um den Baumstamm herumgelegt wird.

Beim Herausziehen des Baumstammes aus dem Wald kann es vorkommen, dass sich der Baumstamm an Hindernissen, wie beispielsweise Baumstümpfen oder Erdhügeln, verhakt. Der Schlepper zieht jedoch weiter am Zugsystem, so dass die auf das Zugsystem wirkende Zugkraft stetig erhöht wird. Dadurch kann es dazu kommen, dass das schwächste Glied des Zugsystems reißt.

Herkömmlicherweise ist dies das als Zugseil verwendete Stahl- oder Drahtseil. Im Moment des Reißens des Zugseils wird die auf das Zugseil wirkende Zugkraft schlagartig reduziert, so dass die nun freien Enden des gerissenen Zugseiles peitschenartig umher fliegen. Durch die relativ große Masse des Zugseiles geht damit eine massive Gefährdung umstehender Personen einher.

Um diese Gefahr zu verringern, werden in jüngster Zeit Kunststoffzugseile eingesetzt. Diese weisen eine deutlich geringere Dichte auf. Durch die Verwendung dieser extrem reißfesten Kunststoffseile ist das Zugseil meist nicht mehr das schwächste Glied des Zugsystems. Es kommt daher häufiger zum Reißen der Vorrichtung, mit der der zu ziehende Baumstamm am Ende des Zugseiles befestigt ist. Diese Vorrichtung ist beispielsweise in Form einer Kette ausgebildet, von der ein Kettenglied bricht.

In diesem Fall wird das an dem Zugseil befindliche Ende der Kette extrem stark in Richtung auf die Zugmaschine beschleunigt. Dieser Effekt ist verglichen mit dem früher verwendeten Draht- oder Stahlseil noch verstärkt, da sich das als Zugseil verwendete Kunststoffseil im zugbelasteten Zustand stärker dehnt. Im Moment des Reißens der Kette zieht sich das Kunststoffseil folglich wieder zusammen und beschleunigt so das an seinem Ende befindliche Ende der Kette.

Dieses Metallteil wird auf extreme Geschwindigkeiten beschleunigt und stellt so eine extreme Gefährdung insbesondere des Fahrers der Zugmaschine dar.

Von dieser Problemstellung ausgehend liegt der Erfindung die Aufgabe zugrunde, eine Einrichtung zum Unterbrechen der Zugkraft bereit zu stellen, mit der die Arbeitssicherheit erhöht wird.

Die Erfindung löst die gestellte Aufgabe durch eine Einrichtung zum Unterbrechen einer Zugkraft mit einem Schneidelement und einem Seilführungselement, das bei Überschreiten einer definierten auf das Seilführungselement wirkenden Maximalzugkraft selbsttätig aus einer Zugposition in eine Schneidposition bewegbar ist.

Die Maximalzugkraft wird dabei vorzugsweise so festgelegt, dass sie erreicht wird, bevor eines der Bauteile des Zugsystems reißt. In der Schneidposition des Seilführungselementes kommt das Zugseil in Kontakt mit dem Schneidelement und wird von diesem durchtrennt. Dadurch, dass das Zugseil durchtrennt und so die Verbindung zwischen der Einrichtung zum Unterbrechen der Zugkraft und dem Zugseil gelöst wird, ist sichergestellt, dass lediglich das Zugseil in Richtung Zugmaschine oder Schlepper beschleunigt wird. Durch seine geringe Dichte wird die Gefahr für umstehende Personen deutlich reduziert. Vorzugsweise ist das Seilführungselement aus der Zugposition in die Schneidposition in Richtung des Schneidelementes bewegbar.

Vorzugsweise ist das Seilführungselement mit einem Sicherungselement verbunden, das bei der Maximalzugkraft reißt. Das Seilführungselement ist dabei so angeordnet, dass es beim Reißen des Sicherungselementes so weit in Zugrichtung verschoben wird, dass das Zugseil mit dem Schneidelement in Kontakt kommt. Somit ist sichergestellt, dass ein versehentliches Zertrennen des Zugseiles durch das Schneidelement ausgeschlossen ist.

Bevor die auf das Zugseil wirkende Zugkraft die vorher festgelegte Maximalzugkraft überschreitet, ist das Seilführungselement relativ zum Schneidelement so angeordnet, dass das Schneidelement nicht mit dem Zugseil in Kontakt kommt. Wenn die Zugkraft die vorher festgelegte Maximalzugkraft erreicht, wird eine Kraft, die das Seilführungselement in seiner Position relativ zum Schneidelement hält, überwunden und das Seilführungselement relativ zum Schneidelement so verschoben, dass das Zugseil vom Schneidelement durchtrennt wird. Die dabei zu überwindende Kraft muss nicht zwangsläufig die eines Sicherungselements sein. Alternativ wird das Seilführungselement beispielsweise durch Reibung oder magnetische Anziehungskraft relativ zum Schneidelement fixiert und die entsprechende Kraft beim Erreichen der vorher festgelegten Maximalzugkraft überwunden.

Vorzugsweise weist das Sicherungselement eine Sollbruchstelle auf, an der das Sicherungselement reißt. Auf diese Weise ist sichergestellt, dass das Sicherungselement an einer vorher definierten Stelle reißt, so dass das Verhalten des Sicherungselementes reproduzierbar und vorhersagbar ist. Vorzugsweise ist die Sollbruchstelle eine Verjüngung des Querschnittes des Sicherungselementes. Auf diese Weise kann die Maximalzugkraft, bei der das Sicherungselement reißt, auf einfache und zugkraft, bei der das Sicherungselement reißt, auf einfache und reproduzierbare Weise eingestellt werden.

Vorzugsweise ist das Sicherungselement eine Schraube oder ein Bolzen mit einer Längsachse, die sich im Wesentlichen in Zugrichtung erstreckt. Dabei bedeutet ein Reißen des Sicherungselementes, dass die für das Reißen verantwortliche Kraft im Wesentlichen in Längsrichtung des Sicherungselementes wirkt. Dies kann beispielsweise direkt die auf das Zugseil wirkende Zugkraft sein, falls sich die Längsachse des Sicherungselementes in Zugrichtung befindet. Dadurch wird eine besonders einfache Ausgestaltung der Zugkraftbegrenzungseinrichtung gewährleistet. Ist die Längsachse des Sicherungselementes beispielsweise senkrecht zur Zugrichtung ausgerichtet, wird vorteilhafterweise die Zugkraft in Richtung der Längsachse des Sicherungselementes umgeleitet.

Das Reißen des Sicherungselementes hat gegenüber dem Brechen, bei dem das Sicherungselement durch eine Kraft zerstört wird, die in einer Richtung senkrecht zur Längsachse des Sicherungselementes wirkt, den Vorteil, dass es so zu weniger Ermüdungserscheinungen kommt. Die vorher festgelegte Maximalzugkraft, bei der das Sicherungselement reißt, ist somit auch über lange Zeiträume stabil, ohne dass sie durch Ermüdungserscheinungen im Laufe der Zeit verändert würde.

Das Schneidelement ist vorzugsweise als Klinge ausgebildet.

Nachfolgend soll ein Ausführungsbeispiel der Erfindung mit Hilfe einer Zeichnung näher beschrieben werden. Es zeigen:

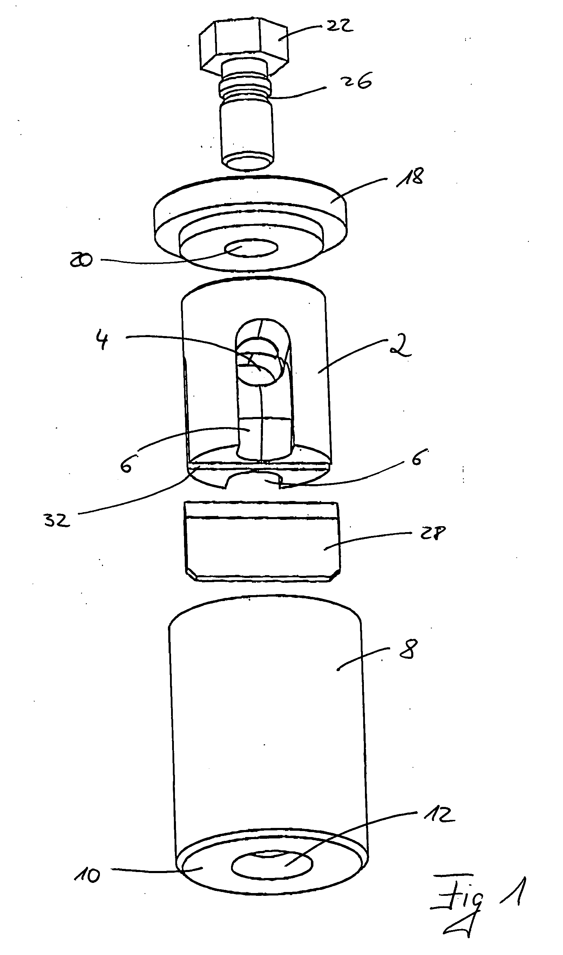

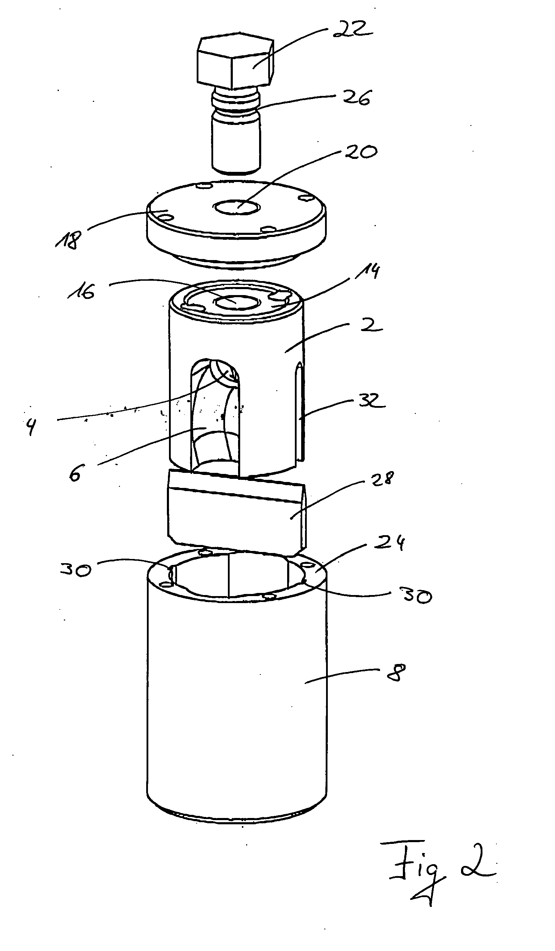

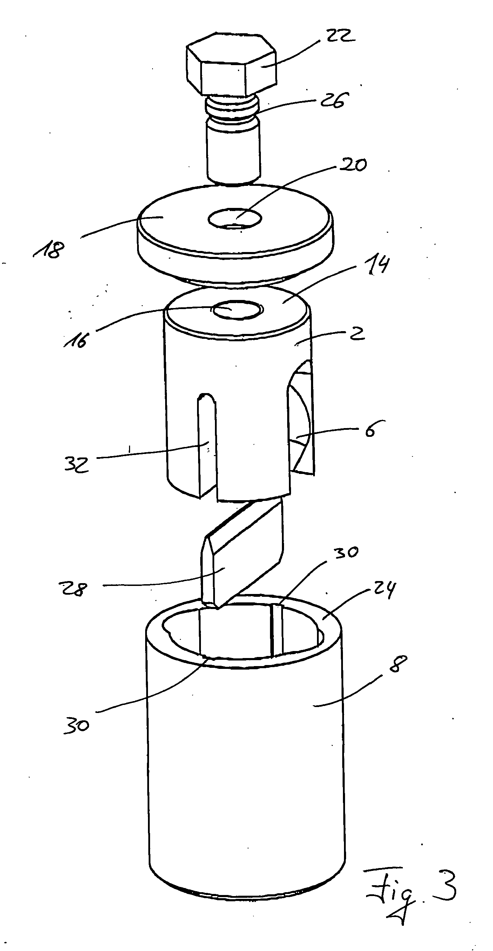

- Figuren 1 bis 3 -: ein Ausführungsbeispiel einer erfindungsgemäßen Einrichtung zum Unterbrechen einer Zugkraft in verschiedenen Perspektiven jeweils in einer Explosionsdarstellung.

Die in den Figuren 1 bis 3 jeweils in einer Explosionsdarstellung dargestellte Einrichtung zum Unterbrechen einer Zugkraft verfügt über ein Seilführungselement 2. Das Seilführungselement 2 weist eine Bohrung 4 auf, durch die ein Zugseil geführt werden kann. Das Zugseil, das in den Figuren 1 bis 3 nicht gezeigt ist, wird in dafür im Seilführungselement 2 vorgesehenen Nuten 6 in den Figuren 1 bis 3 nach unten geführt.

Das Seilführungselement 2 befindet sich in einer Hülse 8, an deren Boden 10 eine zentrale Ausnehmung 12 vorgesehen ist. Die Enden des Zugseils werden, nachdem sie durch die Bohrung 4 und die Nuten 6 geführt wurden, durch die Ausnehmungen 12 geleitet. Beide Enden des Zugseils verlassen die Hülse 8 folglich in den Figuren 1 bis 3 nach unten.

Das Seilführungselement 2 weist an seiner Oberseite 14 eine Gewindebohrung 16 auf. Oberhalb des Seilführungselements 2 befindet sich ein Deckel 18, der eine zentrale Bohrung 20 aufweist. Durch die Bohrung 20 im Deckel 18 und die Gewindebohrung 16 im Seilführungselement 2 wird ein Sicherungselement 22 geführt, das als Schraube ausgebildet ist. Das nicht gezeigte Gewinde des Sicherungselements 22 greift in das Innengewinde der Gewindebohrung 16 ein. Im montierten Zustand wird so das Seilführungselement 2 an den Deckel 18 herangezogen.

Der Deckel 20 liegt auf dem Rand 24 der Hülse 8 auf. Im Betriebszustand hängt das Seilführungselement 2 daher am Deckel 18, ohne den Boden 10 der Hülse 8 zu berühren.

Das Sicherungselement 22 ist mit einer Sollbruchstelle 26 ausgestattet. Die Sollbruchstelle 26 ist im gezeigten Ausführungsbeispiel als eine Querschnittsverjüngung des Sicherungselementes 22 ausgestaltet.

Die Einrichtung zum Unterbrechen einer Zugkraft weist zusätzlich eine Klinge als Schneidelement 28 auf, das im gezeigten Ausführungsbeispiel in zwei Führungsnuten 30 an der Innenseite der Hülse 8 gelagert ist. Dabei liegt das Schneidelement 28 auf dem Boden 10 der Hülse 8 auf.

Das Seilführungselement 2 verfügt über eine weitere Nut 32, in der sich im zusammengebauten Zustand das Schneidelement 28 befindet. Solange das Seilführungselement 2 durch das Sicherungselement 22 an den Deckel 18 angeschraubt ist, reicht die Oberkante des Schneidelementes 28 nicht in die Bohrung 4 im Seilführungselement 2.

Wird im Betrieb die vom Zugseil auf das Seilführungselement 2 und damit auf das Sicherungselement 22 aufgebrachte Zugkraft größer als eine vorher festgelegte Maximalzugkraft, reißt das Sicherungselement 22 an der Sollbruchstelle 26. Dadurch folgt das Seilführungselement 2 der durch das Zugseil auf das Seilführungselement 2 aufgebrachten Zugkraft in den Figuren 1 bis 3 nach unten, bis das Seilführungselement 2 am Boden 10 der Hülse 8 anliegt.

In diesem Fall gelangt die Schnittkante des Schneidelementes 28 in die Bohrung 4 im Seilführungselement 2 und durchtrennt dort das Zugseil. Die nun freien Enden des Zugseiles können dann die Hülse 8 durch die Ausnehmung 12 im Boden 10 verlassen.

Somit ist gewährleistet, dass sich bei Erreichen der Maximalzugkraft die Einrichtung zum Unterbrechen der Zugkraft vom Zugseil löst und nur das Zugseil in Richtung der die Zugkraft ausübenden Zugeinrichtung beschleunigt wird. Die Gefahr für umstehende Personen und den Führer der Zugeinrichtung ist somit deutlich reduziert, da lediglich das eine geringe Dichte aufweisende Zugseil beschleunigt wird.

### Bezugszeichenliste

- 2: Seilführungselement
- 4: Bohrung
- 6: Nut
- 8: Hülse
- 10: Boden
- 12: Ausnehmung
- 14: Oberseite
- 16: Gewindebohrung
- 18: Deckel
- 20: Bohrung
- 22: Sicherungselement
- 24: Rand
- 26: Sollbruchstelle
- 28: Schneidelement
- 30: Führungsnut
- 32: Nut

## Patentansprüche

1. Einrichtung zum Unterbrechen einer Zugkraft in einem eine Zugeinrichtung und ein Zugseil aufweisenden Zugsystem, **gekennzeichnet durch** ein Schneidelement (28) und ein Seilführungselement (2), das bei Überschreiten einer definierten auf das Seilführungselement (2) wirkenden Maximalzugkraft selbsttätig aus einer Zugposition in eine Schneidposition bewegbar ist.

2. Einrichtung nach Anspruch 1, **dadurch gekennzeichnet, dass** das Seilführungselement (2) aus der Zugposition in die Schneidposition in Richtung des Schneidelementes (28) bewegbar ist.

3. Einrichtung nach Anspruch 1 oder 2, **dadurch gekennzeichnet, dass** das Seilführungselement (2) mit einem Sicherungselement (22) verbunden ist, das bei der Maximalzugkraft reißt.

4. Einrichtung nach Anspruch 3, **dadurch gekennzeichnet, dass** das Sicherungselement (22) eine Sollbruchstelle (26) aufweist.

5. Einrichtung nach Anspruch 4, **dadurch gekennzeichnet, dass** die Sollbruchstelle (26) eine Verjüngung eines Querschnittes des Sicherungselements (22) ist.

6. Einrichtung nach Anspruch 3, 4 oder 5, **dadurch gekennzeichnet, dass** das Sicherungselement (22) eine Schraube oder ein Bolzen mit einer Längsachse ist, die sich im Wesentlichen in Zugrichtung erstreckt.

7. Einrichtung nach einem oder mehreren der vorstehenden Ansprüche, **dadurch gekennzeichnet, dass** das Schneidelement (28) eine Klinge ist.

8. Zugsystem mit einer Zugeinrichtung und einem Zugseil, **gekennzeichnet durch** eine Einrichtung nach einem oder mehreren der vorstehenden Ansprüche.
